# EUROPEAN PATENT APPLICATION

(11) **EP 4 851 619 A1**
(43) Date of publication of application: **09.12.2026**
(21) Application number: 24957150.6
(22) Date of filing: 11.12.2024
(51) Int. Cl.: G01N 29/04

(54) **METHOD FOR CORRECTING DEFECT DEPTH OF BASE MATERIAL UNDER SURFACING PROCESS**

(30) Priority: 09.10.2024 CN 202411402121
(71) Applicant: China Nuclear Power Engineering Co., Ltd., Shenzhen, Guangdong 518116 (CN)
(72) Inventor: LI, Jiakang, Shenzhen, Guangdong 518116 (CN); WAN, Zhijian, Shenzhen, Guangdong 518116 (CN); WANG, Haowei, Shenzhen, Guangdong 518116 (CN); CHENG, Ming, Shenzhen, Guangdong 518116 (CN); KUANG, Yanjun, Shenzhen, Guangdong 518116 (CN); TANG, Liang, Shenzhen, Guangdong 518116 (CN); DONG, Yiling, Shenzhen, Guangdong 518116 (CN)
(74) Representative: 2K Patent Partnerschaft mbB
(86) International application number: PCT/CN2024/138511
(87) International publication number: WO 2026/076812

(57) **Abstract**

A method for correcting a defect depth of a base material under a cladding process, the method includes: providing a plurality of rectangular cutting grooves having different depths on a test specimen for simulating defects, wherein a material of the test specimen is the same as a material of the base material to be clad; cladding on a surface of the test specimen in a direction perpendicular to a length direction of each of the plurality of rectangular cutting grooves to obtain a post-cladding test specimen; cutting the post-cladding test specimen to reveal cross-sections of the plurality of rectangular cutting grooves having different depths; measuring cross-sections of the rectangular cutting grooves at different depths to obtain post-cladding depths of the rectangular cutting grooves at different depths; obtaining a defect depth correction value according to the post-cladding depths of the plurality of rectangular cutting grooves, and correcting the defect depth of the base material to be clad according to the defect depth correction value.

## Description

### Technical Field

The present invention relates to the technical field of material welding and non-destructive testing, in particular to a method for correcting a defect depth of a base material under a cladding process.

### Background

Important equipment of nuclear power plants, such as reactor pressure vessels, steam generators, pressurizer, etc., usually use special low-alloy steel as the material of the vessel structure due to high temperature, high pressure and irradiation. However, the low-alloy steel is susceptible to corrosion when in contact with the reactor coolant. Therefore, an austenitic stainless steel alloy layer is usually applied to the inner surface of the vessel through cladding process to prevent corrosion, thereby ensuring the performance of power plant equipment and extending its operational life.

In the implementation of the overlay welding process, welding quality is generally ensured by selecting an appropriate overlay welding material, optimizing the welding process and other measures. However, the overlay welding process also affects the surface of the base material of the equipment, and may cause cracks on the surface of the base material due to defects in the surface of the base material or improper control of welding process. During the operation of the power station, under the conditions of high temperature and high pressure inside the container, the stress borne by the inner surface of the low-alloy steel of the container is the largest, and if there are tiny defects on the surface of the base material, it will expand into cracks under the action of stress and extend from inside to outside. According to the feedback of the engineering practice of a nuclear power plant in foreign countries, it has been found that cracks exist on the surface of the base material below the cladding layer.

Crack-type defects pose the greatest threat to the safe operation of the equipment. When a crack reaches a certain depth, it can cause cracking or fracture of the base metal, severely impacting nuclear safety. Therefore, after the completion of overlay welding on the inner surface base metal of the equipment and after subsequent operation, it is necessary to perform ultrasonic testing (UT) on the base material beneath the cladding layer to detect whether dangerous defects, such as cracks caused by the cladding process or service operation, exit in the base material under the cladding layer.

A key step in UT inspection technology is to calibrate the equipment, that is, to calibrate the ultrasonic inspection equipment using the inspection data of standard test specimens with known defects to ensure that they can correctly identify and measure defects. The standard test specimen provides a known reference point to help the inspector understand the performance of different types and sizes of defects on the ultrasound image. In practice, standard test specimens typically contain a series of artificial defects of different sizes and types, which are embedded in the material for ultrasonic detection. By analyzing the ultrasonic responses of these known defects, a database can be established for comparing the unknown defects found in actual testing.

Since the cladding process is a machining process of metal remelting and reconstruction, the prefabricated rectangular cutting grooves (open grooves) on the surface of the base material to be clad will be affected by the cladding process on the rectangular cutting grooves. As a result, the dimensions of the prefabricated defects, especially the depth, change due to the clad welding process. Moreover, after cladding, it is no longer possible to accurately measure the rectangular cutting grooves (as the open grooves become embedded/submerged grooves). That is, the dimensions of the simulated defects beneath the cladding layer cannot be accurately determined, causing the standard test specimen to no longer be "standard", thereby affecting the accuracy of the UT inspection technology.

### Summary

In view of the above defects, the present invention provides a method for correcting a defect depth of a base material under a cladding process to solve the technical problem of inaccurate reference data of UT inspection technology.

In order to achieve the above objective and other related objectives, the present invention provides a method for correcting a defect depth of a base material under a cladding process, the method includes: providing a plurality of rectangular cutting grooves having different depths on a test specimen for simulating defects, wherein a material of the test specimen is the same as a material of the base material to be clad; cladding on a surface of the test specimen in a direction perpendicular to a length direction of each of the plurality of rectangular cutting grooves to obtain a post-cladding test specimen; cutting the post-cladding test specimen to reveal cross-sections of the plurality of rectangular cutting grooves having different depths; measuring cross-sections of the rectangular cutting grooves at different depths to obtain post-cladding depths of the rectangular cutting grooves at different depths; obtaining a defect depth correction value according to the post-cladding depths of the plurality of rectangular cutting grooves, and correcting the defect depth of the base material to be clad according to the defect depth correction value.

In an embodiment of the invention, the plurality of rectangular cutting grooves with different depths are arranged at intervals along the direction perpendicular to the length direction of the rectangular cutting grooves, at least one cross-section exists in the direction perpendicular to the length direction of the rectangular cutting grooves, wherein the at least one cross-section is capable of cutting each of the rectangular cutting grooves into two parts.

In an embodiment of the invention, depths of the plurality of rectangular cutting grooves along the direction perpendicular to the length direction of the rectangular cutting grooves gradually increase or gradually decrease, and a depth difference between any two adjacent rectangular cutting grooves is equal.

In an embodiment of the invention, the step of forming a plurality of rectangular cutting grooves having different depths on the test specimen includes: providing a plurality of groups of rectangular cutting grooves at intervals along a first direction on the test specimen, wherein each group of rectangular cutting grooves comprises a plurality of rectangular cutting grooves having different depths arranged at intervals along a direction perpendicular to the first direction, and the first direction is a length or width direction of the test specimen.

In an embodiment of the invention, measuring cross-sections of the rectangular cutting grooves at different depths to obtain a post-cladding depth of each rectangular cutting groove includes: measuring cross-sections of the plurality of groups of rectangular cutting grooves having different depths to obtain post-cladding depths of the rectangular cutting grooves for the plurality of groups at different depths; and obtaining, based on the post-cladding depths of the rectangular cutting grooves at a same depth across the plurality of groups, the post-cladding depth of each rectangular cutting groove at each depth.

In an embodiment of the invention, the step of forming a plurality of rectangular cutting grooves having different depths on the test specimen includes: obtaining a length of each rectangular cutting groove according to a preset depth of each rectangular cutting groove, a preset minimum multiple and a preset maximum multiple; obtaining widths of all the rectangular cutting grooves according to a minimum value of depths of the rectangular cutting grooves and a preset ratio; and arranging the plurality of rectangular cutting grooves having different depths on the test specimen according to the preset depth, the length, and the width of each rectangular cutting groove.

In an embodiment of the invention, when the surface of the test specimen is clad, the cladding thickness is greater than or equal to a set threshold.

In an embodiment of the invention, in the step of measuring cross-sections of the rectangular cutting grooves at different depths to obtain a post-cladding depth of each rectangular cutting groove, for any one of the rectangular cutting grooves: measuring the rectangular cutting groove on two opposite cross-sections of the rectangular cutting groove to obtain two depth values of the rectangular cutting groove, and taking an average value of the two depth values as the post-cladding depth of the rectangular cutting groove.

In a specific embodiment of the present invention, the step of obtaining a defect depth correction value according to the post-cladding depths of the plurality of rectangular cutting grooves includes: obtaining penetration differences of the rectangular cutting grooves at different depths according to the depth of the rectangular cutting groove at each depth after cladding; and obtaining the defect depth correction value according to the penetration differences of the rectangular cutting grooves at different depths.

In an embodiment of the invention, the step of correcting the defect depth of the base material to be clad according to the defect depth correction value includes: correcting the defect depth of the base material to be clad according to a sum of a preset defect depth and the defect depth correction value.

The beneficial effects of the present invention are as follows. The present invention provides a method for correcting a defect depth of a base material under a cladding process, which comprises constructing a test specimen made of the same material as a base material to be clad, simulating a plurality of defects on the test specimen and performing cladding processing, then cutting the test specimen to expose post-cladding depths of rectangular cutting grooves at different depths, obtaining a defect depth correction value, and finally correcting the defect depth of the base material to be clad by using the correction value, thereby obtaining a more accurate database, and ensuring the effectiveness and accuracy of the minimum detectable defect capability test for the UT inspection technology of the base material beneath the cladding layer.

### Brief Description of Drawings

In order to more clearly illustrate the technical solutions of the embodiments of the present invention, the accompanying drawings required for describing the embodiments will be briefly introduced below, and it is obvious that the accompanying drawings in the following description are only some embodiments of the present invention, and those of ordinary skill in the art can obtain other drawings according to these drawings without creative efforts.
FIG. 1 is a flowchart of a method for correcting a defect depth of a base material according to an embodiment of the present invention;
FIG. 2 is a schematic structural diagram of a test specimen according to an embodiment of the present invention;
FIG. 3 is a setup flowchart of rectangular cutting groove according to an embodiment of the present invention;
FIG. 4 is a schematic structural diagram of a test specimen after cutting according to an embodiment of the present invention;
FIG. 5 is a post-cladding depth calculation flowchart of a rectangular cutting groove after cladding according to an embodiment of the present invention;
FIG. 6 is a flowchart of defect depth correction value calculation according to an embodiment of the present invention.

### Detailed Description

The embodiments of the present invention are described below through specific examples, and those skilled in the art can easily understand other advantages and effects of the present invention from the content disclosed in this specification. It should be noted that the following embodiments and features in the embodiments may be combined with each other without conflict. In addition to the specific methods, devices, and materials used in the embodiments, any methods, devices, and materials in the prior art similar or equivalent to the methods, devices, and materials described in the embodiments of the present invention may be used to implement the present invention according to the knowledge of those skilled in the art and the description of the present invention.

It should be understood that the terms used in the embodiments of the present invention are intended to describe specific embodiments, but not to limit the protection scope of the present invention. Unless otherwise defined, all technical and scientific terms used in the present invention have the same meaning as commonly understood by those skilled in the art.

The structures, proportions, sizes, etc. shown in the drawings of the present invention are only used to cooperate with the contents disclosed in the present invention for those skilled in the art to understand and read, and are not used to limit the practical limitation conditions of the present invention, so they have no technical substantial meaning. Any modification of the structure, change of the proportional relationship or adjustment of the size should still fall within the scope covered by the technical content disclosed in the present invention without affecting the effects and objectives that can be achieved by the present invention. In addition, the drawings only show the components related to the present invention, rather than drawing according to the number, shape and size of the components in actual implementation, the type, number and proportion of each component in actual implementation may be arbitrarily changed, and the component layout type may be more complex.

In the following description, numerous details are discussed to provide a more thorough explanation of embodiments of the present invention, however, it may be apparent to those skilled in the art that embodiments of the present invention may be practiced without these specific details, and in other embodiments, well-known structures and devices are shown in block diagram form rather than in detail to avoid obscuring embodiments of the present invention.

The flowchart and block diagrams in the figures illustrate the architecture, functionality, and operation of possible implementations of methods and computer program products according to various embodiments disclosed herein. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

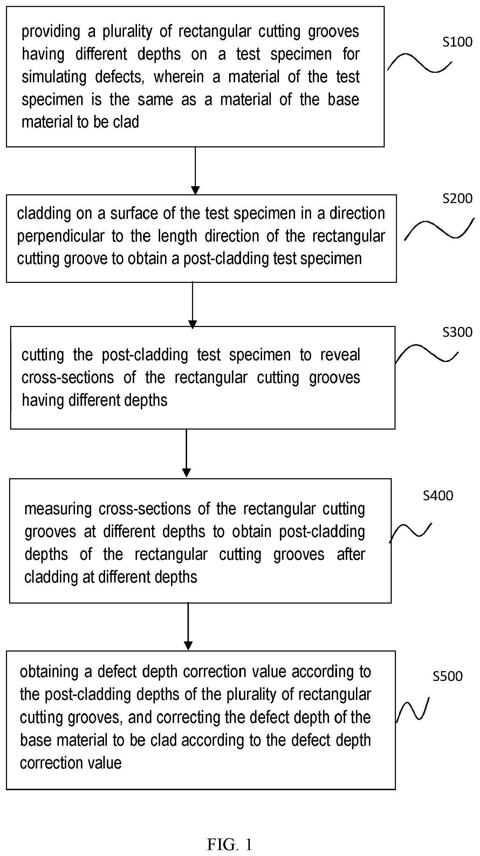

Referring to FIG. 1, FIG. 1 is a method for correcting a defect depth of a base material under a cladding process according to an embodiment of the present invention, the method includes steps S100 to S500.

Step S100: providing a plurality of rectangular cutting grooves having different depths on a test specimen for simulating defects, wherein a material of the test specimen is the same as a material of the base material to be clad. In combination with factors such as the importance of nuclear power plant equipment, the cladding range, and the cladding difficulty, a cladding part on an inner wall of a connecting pipe of the reactor pressure vessel is selected as a typical test object of this test, and the material of the base material to be clad is low alloy steel (16MND5).

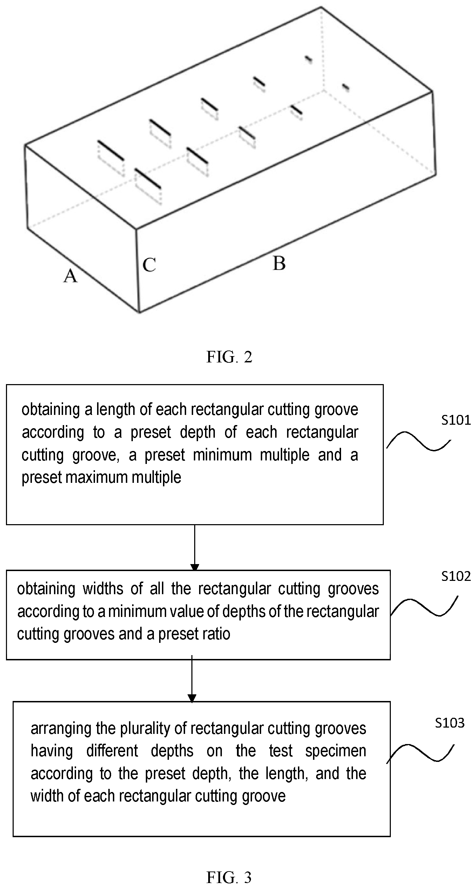

The size of the test specimen should be selected according to the principle of minimum feeding, and a test specimen with a smaller size is selected as much as possible without generating defect interference. Taking the rectangular cutting groove shown in FIG. 2 as an example, the size of the test specimen is 180 mm × 120 mm × 90 mm (length × width × height), five rectangular cutting grooves to simulate defects are planned to be designed, with a spacing of 30 mm between adjacent grooves, and the outermost grooves are also spaced 30 mm from the opposite end surfaces of the test specimen, respectively.

The plurality of rectangular cutting grooves having different depths are usually arranged at a largest surface of the test specimen, theoretically, these rectangular cutting grooves can be arranged in any manner, but in order to facilitate subsequent cutting and measurement, the plurality of rectangular cutting grooves with different depths should be aligned as much as possible. The plurality of rectangular cutting grooves with different depths may be spaced apart in a direction parallel to the length direction of the rectangular cutting grooves, or may be spaced apart in a direction perpendicular to the length direction of the rectangular cutting grooves.

Referring to FIG. 2, in a specific embodiment of the present invention, a plurality of rectangular cutting grooves with different depths are arranged at intervals in a direction perpendicular to the length direction of the rectangular cutting grooves, which facilitates subsequent cutting after such arrangement. At least one cross-section exists in the direction perpendicular to the length direction of the rectangular cutting grooves, wherein the at least one cross-section is capable of cutting each of the rectangular cutting grooves into two parts. It should be noted that, for a plurality of groups of rectangular cutting grooves mentioned below (for example, two groups in FIG. 2), "capable of cutting each of the rectangular cutting grooves into two parts" means "each rectangular cutting groove in each group of rectangular cutting grooves can be cut into two parts". If there is only one rectangular cutting groove at each depth, it should be ensured that at least one cross-section can cut all the rectangular cutting grooves into two parts. Specifically, as shown in FIG. 2, the plurality of rectangular cutting grooves with different depths may be aligned at their center lines; or alternatively, the plurality of rectangular cutting grooves with different depths may be aligned at the same widthwise side thereof.

In order to clearly illustrate the length, width and depth direction of the rectangular cutting groove, three sides, side A, side B and side C, are marked in FIG. 2. A direction parallel to the side A is a length direction of the rectangular cutting groove, which is also referred to as a grooving direction of the rectangular cutting groove; a direction parallel to the side B is a width direction of the rectangular cutting groove; and a direction parallel to the side C is a depth direction of the rectangular cutting groove.

In an embodiment of the invention, depths of the plurality of rectangular cutting grooves along the direction perpendicular to the length direction of the rectangular cutting grooves gradually increase or gradually decrease, and a depth difference between any two adjacent rectangular cutting grooves is equal. For example, the depths of a plurality of rectangular cutting grooves with different depths are 2 mm, 4 mm, 6 mm, 8 mm, and 10 mm, respectively, which are used to simulate five crack-type defects with specific sizes, and the sensitivity of different defect depths to the cladding process is also considered.

Referring to FIG. 2, in a specific embodiment of the present invention, the step of providing a plurality of rectangular cutting grooves with different depths on the test specimen includes: providing a plurality of groups of rectangular cutting grooves at intervals along a first direction on the test specimen, where each group of rectangular cutting grooves includes a plurality of rectangular cutting grooves with different depths spaced apart along a direction perpendicular to the first direction, and the first direction is a length direction or a width direction of the test specimen. The multiple groups of rectangular cutting grooves are arranged with the same process parameters across the groups. In FIG. 2, the first direction is the width direction of the test specimen, two groups of rectangular cutting grooves are provided, and each group of rectangular cutting grooves is composed of five rectangular cutting grooves with different depths. The reason why multiple groups of rectangular cutting grooves are provided is to ensure the accuracy and representativeness of test results.

Referring to FIG. 3, in a specific embodiment of the present invention, a plurality of rectangular cutting grooves with different depths are disposed on the test specimen, including steps S101 to S103.

S101, obtaining a length of each rectangular cutting groove according to a preset depth of each rectangular cutting groove, a preset minimum multiple and a preset maximum multiple. The preset depth of each rectangular cutting groove is set in advance according to mechanical calculation requirements, for example, the preset depth is 2 mm, 4 mm, 6 mm, 8 mm, or 10 mm.

The rectangular cutting groove mainly simulates a crack-type defect, and its critical dimension information is the depth of the rectangular cutting groove, and the length is often a multiple of the depth. Therefore, in this embodiment, based on the preset depth, the length of the rectangular cutting groove is calculated in combination with the preset minimum multiple and preset maximum multiple. The preset minimum multiple may be, for example, 2 times, and the preset maximum multiple may be, for example, 3 times. When the depth of the rectangular cutting groove is different, the length will change accordingly. For example, the length of the rectangular cutting groove with a depth of 2 mm may be any value in the range of 4 to 6 mm, and the length of the rectangular cutting groove with a depth of 10 mm may be any value in the range of 20 to 30 mm.

S102, obtaining widths of all the rectangular cutting grooves according to a minimum value of depths of the rectangular cutting grooves and a preset ratio. The widths of the rectangular cutting grooves with different depths may be the same, the main size of the rectangular cutting groove is the depth, and the width of the rectangular cutting groove is generally small for crack-type defects, so the width of the rectangular cutting groove is calculated according to the minimum value of the depths of the rectangular cutting groove in this embodiment. In the above example, the minimum depth of the rectangular cutting grooves is 2 mm, and the preset ratio may be, for example, any value less than or equal to 0.3, for example, the preset ratio is equal to 0.1, then the width of the rectangular cutting groove calculated according to the preset ratio is 0.2 mm.

S103, arranging the plurality of rectangular cutting grooves having different depths on the test specimen according to the preset depth, the length, and the width of each rectangular cutting groove. After the depth, length and width of each rectangular cutting groove are known, in combination with the arrangement in the above embodiments, a test specimen meeting the requirements can be processed.

S200, cladding on a surface of the test specimen in a direction perpendicular to the length direction of the rectangular cutting groove to obtain a post-cladding test specimen. The filler material in the cladding treatment may be, for example, austenitic stainless steel (308L/309L type), and the cladding method may be, for example, Tungsten Inert Gas (TIG). TIG is an arc welding technology that uses a tungsten electrode and an inert gas (usually argon or helium) to protect the welding area. TIG welding is known for its high quality, high precision, and high operator skill requirements, and is commonly used in welding sheet metal and where heat input needs to be tightly controlled.

In a specific embodiment of the present invention, when the surface of the test specimen is clad, the cladding thickness is greater than or equal to a set threshold. The designed thickness of the cladding layer is usually based on the required mechanical properties, corrosion resistance or wear resistance, ensuring that the cladding thickness meets or exceeds this threshold, which can ensure that the welded structure meets the design and functional requirements. During non-destructive testing such as ultrasonic testing, it is necessary to ensure that the thickness of the cladding layer can allow ultrasonic waves to effectively penetrate and reflect, so as to accurately detect defects of the base material beneath the cladding layer, and if the cladding layer is too thin, it may not be possible to effectively detect deeper defects. For example, for the test specimen of the above size, the set threshold may be 7 mm.

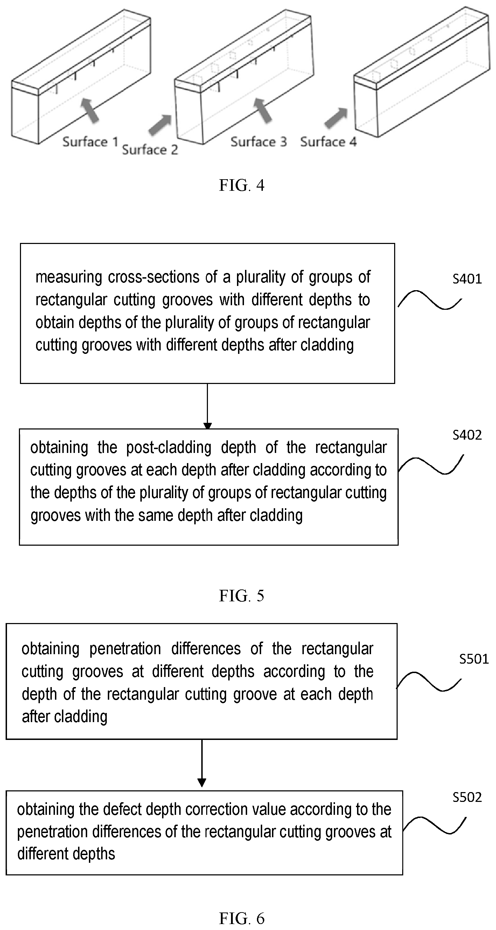

S300, cutting the post-cladding test specimen to reveal cross-sections of the rectangular cutting grooves having different depths. The cross-section of the rectangular cutting groove is exposed for subsequent measurement of an actual post-cladding depth of the rectangular cutting groove after cladding. Taking the above test specimen as an example, the structure of the test specimen after cutting is shown in FIG. 4, at this time, the cross-sections of all the rectangular cutting grooves are exposed, and the next measurement operation can be performed. Since the material of the test specimen is hard, it can be cut by wire cutting, which is a processing technology that uses a moving fine metal wire (usually a copper wire or a molybdenum wire) as a tool electrode to cut the material through the principle of electric spark discharge.

S400, measuring cross-sections of the rectangular cutting grooves at different depths to obtain post-cladding depths of the rectangular cutting grooves after cladding at different depths. During measurement, a qualified measuring instrument (for example, a tool such as a vernier caliper or a ruler) may be used to accurately measure the depth dimension of the rectangular cutting groove on the test specimen after wire cutting.

Referring to FIG. 5, in a specific embodiment of the present invention, step S400 includes: S401, measuring cross-sections of a plurality of groups of rectangular cutting grooves with different depths to obtain depths of the plurality of groups of rectangular cutting grooves with different depths after cladding; and S402, obtaining the post-cladding depth of the rectangular cutting grooves at each depth after cladding according to the depths of the plurality of groups of rectangular cutting grooves with the same depth after cladding. When multiple groups of rectangular cutting grooves are configured, there will be multiple measurement results for the rectangular cutting grooves at the same depth; therefore, step S402 is required to process the data and obtain the post-cladding depths of the rectangular cutting grooves at that depth. For example, it can be calculated by averaging, that is, an average value of the depths of the rectangular cutting grooves of the same depth in multiple groups after cladding is regard as the post-cladding depth of the rectangular cutting grooves at each depth.

In a specific embodiment of the present invention, in step S400, for any rectangular cutting groove: measuring the two surfaces corresponding to the cross-sections of the rectangular cutting groove to obtain two depth values of the rectangular cutting groove, and then take an average of the two depth values as the post-cladding depth of the rectangular cutting groove. Referring to FIG. 4, theoretically, the sizes measured by the two surfaces corresponding to the cross-sections of the rectangular cutting groove should be the same, but due to the existence of measurement errors, the measurement results will be slightly different. Therefore, in this embodiment, each of the two surfaces is measured once to obtain two depth values, and then an average value of the two depth values is obtained.

In a specific embodiment of the present invention, the above two solutions may be combined, that is, the depths of multiple groups of rectangular cutting grooves are measured simultaneously, and two surfaces of each rectangular cutting groove across the groups are measured.

**Table 1: Test results of the impact of TIG cladding process on target defect depth**

| | Target Defect Dimensions and Actual Measurements | | | | |
|---|---|---|---|---|---|
| Depth of Rectangular Cutting Groove | 10 | 8 | 6 | 4 | 2 |
| Surface 1 | 8.61 | 6.54 | 4.25 | 2.20 | 0.32 |
| Surface 2 | 8.44 | 6.50 | 4.25 | 2.30 | 0.35 |
| Surface 3 | 8.46 | 6.41 | 4.62 | 2.38 | 0.31 |
| Surface 4 | 8.66 | 6.64 | 4.72 | 2.37 | 0.35 |
| Average Value | 8.5425 | 6.5225 | 4.46 | 2.3125 | 0.3325 |
| Penetration Difference | 1.4575 | 1.4775 | 1.54 | 1.6875 | 1.6675 |
| Average Value of Penetration Differences | 1.566 | | | | |

In Table 1, the surface 1 and the surface 2 correspond to measured values of two corresponding cross-sections after the first group of rectangular cutting grooves are cut, and the surface 3 and the surface 4 correspond to measured values of two corresponding cross-sections after the second group of rectangular cutting grooves are cut. The average value in Table 1 is the post-cladding depth of the rectangular cutting groove at each depth obtained in step S400.

S500, obtaining a defect depth correction value according to the post-cladding depths of the plurality of rectangular cutting grooves, and correcting the defect depth of the base material to be clad according to the defect depth correction value. The defect depth correction value is only one value that is independent of the depth of the rectangular cutting grooves, so the defect depth correction value needs to be calculated according to the depths of the rectangular cutting grooves after cladding at different depths.

Referring to FIG. 6, in a specific embodiment of the present invention, the step of obtaining a defect depth correction value according to the post-cladding depths of the plurality of rectangular cutting grooves includes: S501, obtaining penetration differences of the rectangular cutting grooves at different depths according to the depth of the rectangular cutting groove at each depth after cladding; and S502, obtaining the defect depth correction value according to the penetration differences of the rectangular cutting grooves at different depths. Taking the above Table 1 as an example, the post-cladding depth of the rectangular cutting grooves after cladding at each depth is the corresponding average value at the row, and different depths correspond to different values. The penetration difference is a difference between the depth of the rectangular cutting groove and the post-cladding depth of the rectangular cutting groove after cladding. Finally, the defect depth correction value is calculated according to the penetration differences, for example, the defect depth correction value may be calculated by calculating an average value, and in Table 1, the defect depth correction value is 1.566 mm.

In a specific embodiment of the present invention, the step of correcting the defect depth of the base material to be clad according to the defect depth correction value includes: correcting the defect depth of the base material to be clad according to a sum of a preset defect depth and the defect depth correction value. After the defect depth correction value is obtained, in order to ensure that depths of the target defects (rectangular cutting grooves) beneath the cladding layer of a subsequent product can meet the requirements of 2 mm, 4 mm, 6 mm, 8 mm and 10 mm after cladding, the depth of the rectangular cutting groove (open groove) should be processed on the surface of the base material to be clad according to the correction schemes of 2+1.566 mm, 4+1.566 mm, 6+1.566 mm, 8+1.566 mm and 10+1.566 mm to correct the influence of the TIG cladding process on the depths of the target defects.

After correction, after the rectangular cutting grooves processed according to the correction schemes are clad, the defect size beneath the cladding layer is closest to the standard requirements of 2 mm, 4 mm, 6 mm, 8 mm and 10 mm. Therefore, the ultrasonic detection data corresponding to the 2+ 1.566 mm rectangular cutting groove is regarded as the ultrasonic detection result corresponding to the standard 2 mm defect; the same applies to other dimensions.

It should be noted that the division of the steps of the above various methods is only for the purpose of clear description, and during implementation, the steps may be combined into one step or some steps may be split and decomposed into multiple steps, as long as the same logical relationship is included, which are all within the protection scope of the present invention; adding inconsequential modifications to the algorithm or process or introducing inconsequential designs, but not changing the core design of the algorithm and process is within the protection scope of the invention.

In general, a more accurate database can be obtained by using the foregoing correction method. Based on the accurate database, the effectiveness and accuracy of the minimum defect detection capability test of the parent material UT inspection technology are also naturally improved.

The above embodiments are merely illustrative of the principles and effects of the present invention, and are not intended to limit the present invention. Any person skilled in the art can modify or change the above embodiments without departing from the scope of the present invention. Therefore, all equivalent modifications or changes made by those of ordinary skill in the art without departing from the spirit and technical ideas disclosed in the present invention should still be covered by the claims of the present invention.

## Claims

1. A method for correcting a defect depth of a base material under a cladding process, comprising:
providing a plurality of rectangular cutting grooves having different depths on a test specimen for simulating defects, wherein a material of the test specimen is the same as a material of the base material to be clad;
cladding on a surface of the test specimen in a direction perpendicular to a length direction of each of the plurality of rectangular cutting grooves to obtain a post-cladding test specimen;
cutting the post-cladding test specimen to reveal cross-sections of the plurality of rectangular cutting grooves having different depths;
measuring cross-sections of the rectangular cutting grooves at different depths to obtain post-cladding depths of the rectangular cutting grooves at different depths;
obtaining a defect depth correction value according to the post-cladding depths of the plurality of rectangular cutting grooves, and
correcting the defect depth of the base material to be clad according to the defect depth correction value.

2. The method for correcting the defect depth of the base material under the cladding process according to claim 1, wherein the plurality of rectangular cutting grooves with different depths are arranged at intervals along the direction perpendicular to the length direction of the rectangular cutting grooves, at least one cross-section exists in the direction perpendicular to the length direction of the rectangular cutting grooves, wherein the at least one cross-section is capable of cutting each of the rectangular cutting grooves into two parts.

3. The method for correcting the defect depth of the base material under the cladding process according to claim 2, wherein depths of the plurality of rectangular cutting grooves along the direction perpendicular to the length direction of the rectangular cutting grooves gradually increase or gradually decrease, and a depth difference between any two adjacent rectangular cutting grooves is equal.

4. The method for correcting the defect depth of the base material under the cladding process according to claim 1, wherein the step of forming a plurality of rectangular cutting grooves having different depths on the test specimen comprises:
arranging a plurality of groups of rectangular cutting grooves at intervals along a first direction on the test specimen, wherein each group of rectangular cutting grooves comprises the plurality of rectangular cutting grooves having different depths arranged at intervals along a direction perpendicular to the first direction, and the first direction is a length or width direction of the test specimen.

5. The method for correcting the defect depth of the base material under the cladding process according to claim 4, wherein measuring cross-sections of the rectangular cutting grooves at different depths to obtain a post-cladding depth of each rectangular cutting groove comprises:
measuring cross-sections of the plurality of groups of rectangular cutting grooves having different depths to obtain post-cladding depths of the rectangular cutting grooves for the plurality of groups at different depths; and
obtaining, based on the post-cladding depths of the rectangular cutting grooves at a same depth across the plurality of groups, the post-cladding depth of each rectangular cutting groove at each depth.

6. The method for correcting the defect depth of the base material under the cladding process according to claim 1, wherein the step of forming a plurality of rectangular cutting grooves having different depths on the test specimen comprises:
obtaining a length of each rectangular cutting groove according to a preset depth of each rectangular cutting groove, a preset minimum multiple and a preset maximum multiple;
obtaining widths of all the rectangular cutting grooves according to a minimum value of depths of the rectangular cutting grooves and a preset ratio; and
arranging the plurality of rectangular cutting grooves having different depths on the test specimen according to the preset depth, the length, and the width of each rectangular cutting groove.

7. The method for correcting the defect depth of the base material under the cladding process according to claim 1, wherein a cladding thickness during cladding on the surface of the test specimen is greater than or equal to a set threshold.

8. The method for correcting the defect depth of the base material under the cladding process according to claim 1, wherein in the step of measuring cross-sections of the rectangular cutting grooves at different depths to obtain a post-cladding depth of each rectangular cutting groove, for any one of the rectangular cutting grooves:
measuring the rectangular cutting groove on two opposite cross-sections of the rectangular cutting groove to obtain two depth values of the rectangular cutting groove, and taking an average value of the two depth values as the post-cladding depth of the rectangular cutting groove.

9. The method for correcting the defect depth of the base material under the cladding process according to claim 1, wherein obtaining a defect depth correction value according to the post-cladding depths of the plurality of rectangular cutting grooves comprises:
obtaining penetration differences of the plurality of rectangular cutting grooves at different depths according to the respective post-cladding depths of the plurality of rectangular cutting grooves at different depths;
obtaining the defect depth correction value based on the penetration differences of the plurality of rectangular cutting grooves at different depth.

10. The method for correcting the defect depth of the base material under the cladding process according to claim 1, wherein correcting the defect depth of the base material to be clad according to the defect depth correction value comprises:
correcting the defect depth of the base material to be clad according to a sum of a preset defect depth and the defect depth correction value.
